# EUROPÄISCHE PATENTSCHRIFT

(11) **EP 2 457 053 B1**
(45) Veröffentlichungstag und Bekanntmachung des Hinweises auf die Patenterteilung: **11.09.2013**
(21) Anmeldenummer: 10736684.1
(22) Anmeldetag: 21.07.2010
(51) Int. Cl.: F28D 20/02, F28D 9/00, F28D 9/04, F01N 3/08, F01N 3/10, F01N 3/28, F01N 5/02, F28D 20/00

(54) **LATENTWÄRMESPEICHERKATALYSATOR FÜR ABGASANLAGE EINER BRENNKRAFTMASCHINE**
LATENT HEAT ACCUMULATOR AND CATALYST FOR EXHAUST SYSTEM OF COMBUSTION ENGINE
ACCUMULATEUR THERMIQUE À CHALEUR LATENTE ET CATALYSEUR POUR UNE INSTALLATION D'ÉCHAPPEMENT D'UN MOTEUR À COMBUSTION

(30) Priorität: 24.07.2009 DE 102009034655
(43) Veröffentlichungstag der Anmeldung: 30.05.2012
(73) Patentinhaber: Eberspächer Exhaust Technology GmbH & Co. KG, 66539 Neunkirchen (DE)
(72) Erfinder: GAISER, Gerd, 72768 Reutlingen (DE)
(74) Vertreter: BRP Renaud & Partner
(86) Internationale Anmeldenummer: PCT/EP2010/060580
(87) Internationale Veröffentlichungsnummer: WO 2011/009894

(56) Entgegenhaltungen:
- EP-A1- 0 596 854
- WO-A2-2008/050210
- CH-A5- 666 118
- DE-A1- 10 329 153
- DE-A1- 19 820 971
- DE-A1-102004 052 106
- FR-A1- 2 081 113

## Beschreibung

Die vorliegende Erfindung betrifft einen Latentwärmespeicherkatalysator für eine Abgasanlage einer Brennkraftmaschine, insbesondere eines Kraftfahrzeugs, mit den Merkmalen des Oberbegriffs des Anspruchs 1.

Ein Latentwärmespeicher charakterisiert sich insbesondere durch die Verwendung eines Phasenwechselmaterials zur Wärmespeicherung. Ein derartiges Phasenwechselmaterial, bei dem es sich üblicherweise um Salze handelt, führt bei der jeweils gewünschten Speichertemperatur einen Phasenwechsel zwischen flüssiger Phase und fester Phase durch. Beim Aufladen des Latentwärmespeichers schmilzt das Wärmespeichermaterial, während es bei der Entladung erstarrt. Unterhalb der Speichertemperatur, also unterhalb der Phasenwechseltemperatur des Phasenwechselmaterials kann der damit gebildete Latentwärmespeicher nur sensible Wärme speichern, also in Form einer Temperaturerhöhung des festen Phasenwechselmaterials. Wenn das Phasenwechselmaterial bis auf seine Phasenwechseltemperatur aufgeheizt ist, schmilzt es, was zu einer latenten Wärmespeicherung durch den Phasenwechsel führt. Die so gespeicherte Wärme wird dabei auf dem Temperaturniveau der Speichertemperatur gespeichert und kann auch bei dieser Temperatur abgerufen werden. Darüber hinaus kann auch das flüssige Phasenwechselmaterial zusätzlich erwärmt werden, was wieder zu einer sensiblen, also temperaturabhängigen Wärmespeicherung führt. Durch Auswahl des Phasenwechselmaterials kann die Speichertemperatur des Latentwärmespeichers auf den jeweiligen Einsatzzweck des Latentwärmespeichers adaptiert werden.

Insbesondere bei Fahrzeuganwendungen können Latentwärmespeicher dazu verwendet werden, die Brennkraftmaschine oder einzelne Komponenten einer Abgasanlage möglichst lange auf Betriebstemperatur zu halten, um die Effizienz der jeweiligen Komponente bzw. der Brennkraftmaschine zu steigern. Da ein zunehmendes Interesse an derartigen Latentwärmespeichem besteht, werden Lösungen für eine kostengünstige Fertigung gesucht, die sich insbesondere für eine Serieproduktion eignen.

Ferner wird mit Latentwärmespeichern versucht, die Kaltstartphasen von aktiven Komponenten der Abgasanlage, wie zum Beispiel von Katalysatoren, zu verkürzen.

Aus der DE 10 2004 052 106 A1 ist ein Latentwärmespeicherkatalysator für eine Abgasanlage einer Brennkraftmaschine bekannt, der einen Körper besitzt, der mehrere parallel zueinander verlaufenden Kanäle aufweist, wobei erste Kanäle ein Phasenwechselmaterial enthalten, während zweite Kanäle eine katalytische Beschichtung aufweisen. Der Körper ist durch mindestens eine Schichtstruktur mit mindestens zwei Blechen gebildet, von denen zumindest eines gewellt ist und die aneinander anliegen, derart, dass die Wellen des wenigstens einen Blechs die Kanäle bilden, wobei die beiden Bleche entlang von Kontaktlinien aneinander anliegen. Die DE 10 2004 052 106 A1 zeigt somit den Oberbegriff von Anspruch 1.

Aus der FR 2 081 113 A1 ist ein Latentwärmespeicher bekannt, der mithilfe von gewickelten Blechbahnen hergestellt ist.

Die DE 103 29 153 A1 offenbart einen Wärmeübertrager mit einer Struktur aus gewellten Blechbahnen.

Die vorliegende Erfindung beschäftigt sich mit dem Problem, für einen Latentwärmespeicher und/oder für einen Katalysator eine verbesserte Ausführungsform anzugeben, die sich insbesondere dadurch auszeichnet, dass sie eine verbesserte Effektivität besitzt und vorzugsweise relativ preiswert herstellbar ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, einen Latentwärmespeicher in einen Katalysator zu integrieren bzw. umgekehrt, um so einen Latentwärmespeicherkatalysator bereitzustellen, der die Funktionalitäten eines Katalysators und eines Latentwärmespeichers in einem Integralbauteil vereint. Des Weiteren beruht die Erfindung auf der grundsätzlichen Idee, einen Körper des Latentwärmespeicherkatalysators durch wenigstens eine Schichtstruktur zu bilden, die mit Hilfe mehrerer Bleche hergestellt wird. Zumindest eines dieser Bleche ist gewellt. Die Bleche liegen aneinander an und sind aneinander befestigt. Hierdurch bilden die Wellen des wenigstens einen Blechs Kanäle innerhalb des Körpers aus, die parallel zueinander verlaufen und von denen zumindest einige mit einem Phasenwechselmaterial befüllt sind, während andere katalytisch aktiv beschichtet sind. Eine derartige Schichtstruktur aus Blechen kann besonders einfach und preiswert hergestellt werden. Insbesondere eignet sie sich auch für eine Serienherstellung.

Entsprechend einer bevorzugten Ausführungsform können die zwei Bleche spiralförmig gewickelt sein, um so den Körper bzw. dessen Schichtstruktur zu bilden. Hierdurch ergibt sich eine besonders preiswerte Herstellbarkeit, da die Schichtstruktur in einer ebenen Konstellation quasi als Endlosmaterial hergestellt werden kann und dann einfach zum Körper aufgewickelt werden kann. Alternativ ist es grundsätzlich ebenso möglich, die zwei Bleche paarweise in ebenen Lagen aufeinander zu schichten, um die Schichtstruktur bzw. den Körper zu bilden.

Beim erfindungsgemäßen Latentwärmespeicherkatalysator ist vorgesehen, dass die beiden Bleche entlang von Kontaktlinien aneinander anliegen und entlang solcher Kontaktlinien aneinander befestigt sind, bspw. mittels Schweißnähten oder Lötverbindungen. Hierdurch ergibt sich eine intensive Aussteifung des Körpers, wodurch er sehr stabil wird und insbesondere selbsttragend sein kann, was die Unterbringung in einem Gehäuse, sogenanntes Canning, vereinfacht.

Um thermisch bedingte Spannungen innerhalb des Körpers zu reduzieren, ist vorgesehen, die beiden Bleche entlang einiger solcher Kontaktlinien lose aneinander anzulegen. Im Bereich dieser lose aneinander anliegenden Kontaktlinien können somit Relativbewegungen zwischen den beiden Blechen auftreten, was den Aufbau thermisch bedingter Spannungen innerhalb des Körpers reduziert.

Zusätzlich oder alternativ ist es möglich, beide Bleche gewellt auszugestalten, wodurch die Bleche quer zur Längsrichtung der Wellen eine gewisse Biegeelastizität besitzen, die es ermöglicht, thermische Spannungen auszugleichen bzw. aufzunehmen.

Erfindungsgemäß ist ferner vorgesehen, dass die beiden Bleche nur entlang von Kontaktlinien aneinander befestigt sind, die beiderseits von mit Phasenwechselmaterial befüllten ersten Kanälen angeordnet sind, während die beiden Bleche entlang einiger anderer Kontaktlinien lose aneinander anliegen, z.B. zwischen zwei katalytisch beschichteten zweiten Kanälen.

Zweckmäßig können die mit Phasenwechselmaterial befüllten ersten Kanäle endseitig verschlossen und von Abgas nicht durchströmbar sind, während die katalytisch beschichteten zweiten Kanäle im Körper von Abgas durchströmbar angeordnet sind.

Innerhalb der wenigstens zwei Bleche aufweisenden Schichtstruktur ist beim erfindungsgemäßen Latentwärmespeicherkatalysator das eine Blech gewellt, während das andere Blech glatt oder ungewellt sein kann. Alternativ kann das andere Blech auch gewellt sein oder ebenfalls Wellen aufweisen.

Sofern innerhalb der wenigstens zwei Bleche aufweisenden Schichtstruktur die beiden Bleche jeweils gewellt sind, können die Wellenstrukturen der beiden gewellten Bleche gleiche Wellenlängen aufweisen. Zusätzlich oder alternativ können die Wellenstrukturen der beiden gewellten Bleche unterschiedliche Amplituden aufweisen. Zusätzlich oder alternativ können die gewellten Bleche hinsichtlich ihrer Wellenstrukturen gleichphasig aneinander anliegen. Zusätzlich oder alternativ können die gewellten Bleche hinsichtlich ihrer Wellenstrukturen phasenverschoben, insbesondere um eine halbe Wellenlänge, aneinander anliegen.

Von besonderem Vorteil ist eine Ausführungsform, bei welcher der Körper aus zumindest zwei Schichtstrukturen zusammengebaut ist, wobei eine erste Schichtstruktur keine zweiten Kanäle und insbesondere nur erste Kanäle aufweist, während eine zweite Schichtstruktur keine ersten Kanäle und insbesondere nur zweite Kanäle aufweist. Hierdurch lassen sich eine den Latentwärmespeicher repräsentierende erste Schichtstruktur und eine den Katalysator repräsentierende zweite Schichtstruktur separat voneinander herstellen und erst beim Zusammenbau bzw. beim Herstellen des Körpers "verheiraten", um den Latentwärmespeicherkatalysator zu bilden. Die separate Herstellbarkeit der unterschiedlichen Schichtstrukturen vereinfacht einerseits die Befüllung mit Phasenwechselmaterial und andererseits die Beschichtung mit Katalysatormaterial.

Bei einem Verfahren zum Herstellen eines solchen Latentwärmespeicherkatalysators kann zumindest eine solche erste Schichtstruktur mit mindestens einer solchen zweiten Schichtstruktur zusammengebaut werden.

Bei einer anderen vorteilhaften Ausführungsform kann vorgesehen sein, das Phasenwechselmaterial so auszuwählen, dass seine Phasenwechseltemperatur bei bzw. oberhalb einer Anspringtemperatur des jeweiligen Katalysatormaterials liegt. Hierdurch kann für den jeweiligen Katalysator eine Stand-by-Funktion realisiert werden, da mit Hilfe des Phasenwechselmaterials der Katalysator relativ lange auf dem Temperaturniveau der Phasenwechseltemperatur gehalten werden kann. Katalytische Beschichtungen, die sich zur Realisierung einer derartigen Stand-by-Funktion eignen, sind bspw. Three-Way-Catalyst (TWC) oder Diesel-Oxidation-Catalyst (DOC). Alternativ (oder bei Verwendung von zwei verschiedenen Phasenwechselmaterialien zusätzlich) ist es möglich, das Phasenwechselmaterial so auszuwählen, dass sich seine Phasenwechseltemperatur am oberen Ende eines zulässigen Betriebstemperaturfensters des jeweiligen Katalysators befindet. Hierdurch kann eine Überhitzung des jeweiligen Katalysators vermieden werden. Nimmt die Temperatur des Katalysators stark zu und erreicht die obere Temperaturgrenze seines Betriebstemperaturfensters, wird die Phasenwechseltemperatur erreicht und das Phasenwechselmaterial schmilzt und nimmt dabei Wärme auf. Während dieser latenten Wärmeaufnahme wird eine Temperaturerhöhung im Katalysator stark reduziert, wodurch dieser vor einer Überhitzung geschützt werden kann. Katalytische Beschichtungen, die sich für eine derartige Funktion eignen, sind insbesondere NOX-Speicher-Katalysator (NSK) und Partial-Oxidation-Catalyst (POC). Wie vorstehend angedeutet, kann der Latentwärmespeicherkatalysator einer besonderen Ausführungsform beide vorbeschriebenen Funktionalitäten realisieren, wenn zwei verschiedene Phasenwechselmaterialien in getrennten ersten Kanälen verwendet werden, die sich durch unterschiedliche Phasenwechseltemperaturen voneinander unterscheiden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung einer Abgasanlage im Bereich eines Latentwärmespeicherkatalysators,
- Fig. 2 bis 12: Schnittansichten durch einen Teil eines Körpers des Latentwärmespeicherkatalysators bei verschiedenen Ausführungsformen.

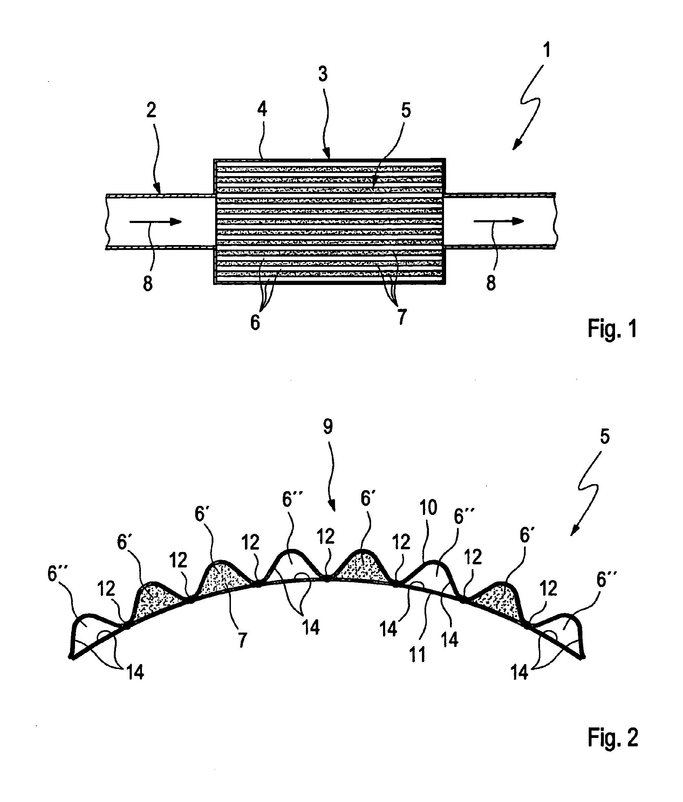

Entsprechend Fig. 1 umfasst eine Abgasanlage 1 einer im Übrigen nicht dargestellten Brennkraftmaschine, die insbesondere in einem Kraftfahrzeug angeordnet sein kann, eine Abgasleitung 2, in der ein Latentwärmespeicherkatalysator 3 angeordnet bzw. eingebunden ist. Der Latentwärmespeicherkatalysator 3 enthält in einem Gehäuse 4 einen Körper 5, der mehrere Kanäle 6 enthält, die parallel zueinander verlaufen und die zum Teil ein Phasenwechselmaterial 7 enthalten. Dabei müssen nicht alle Kanäle 6 mit dem Phasenwechselmaterial 7 befüllt sein. Vielmehr sind einige der Kanäle 6 so in die Abgasleitung 2 eingebunden, dass sie von einer in der Abgasleitung 2 transportierten Abgasströmung 8 durchströmbar sind. Die mit Phasenwechselmaterial 7 befüllten Kanäle 6 werden im Folgenden als erste Kanäle bezeichnet und in den Schnittdarstellungen der Fig. 2 bis 12 mit 6' bezeichnet. Von den verbleibenden, nicht mit dem Phasenwechselmaterial 7 befüllten Kanälen 6 sind einige mit einer katalytisch aktiven Beschichtung 14 versehen. Die mit der katalytischen Beschichtung 14 versehenen Kanäle 6 sind im Betrieb der Abgasanlage 1 vom Abgas durchströmt und werden im Folgenden als zweite Kanäle bezeichnet, die in den Fig. 2 bis 12 mit 6" bezeichnet. Außerdem können grundsätzlich auch weitere, dritte Kanäle 6 vorhanden sein, die weder Phasenwechselmaterial 7 enthalten noch mit einer Katalysatorbeschichtung 14 versehen sind.

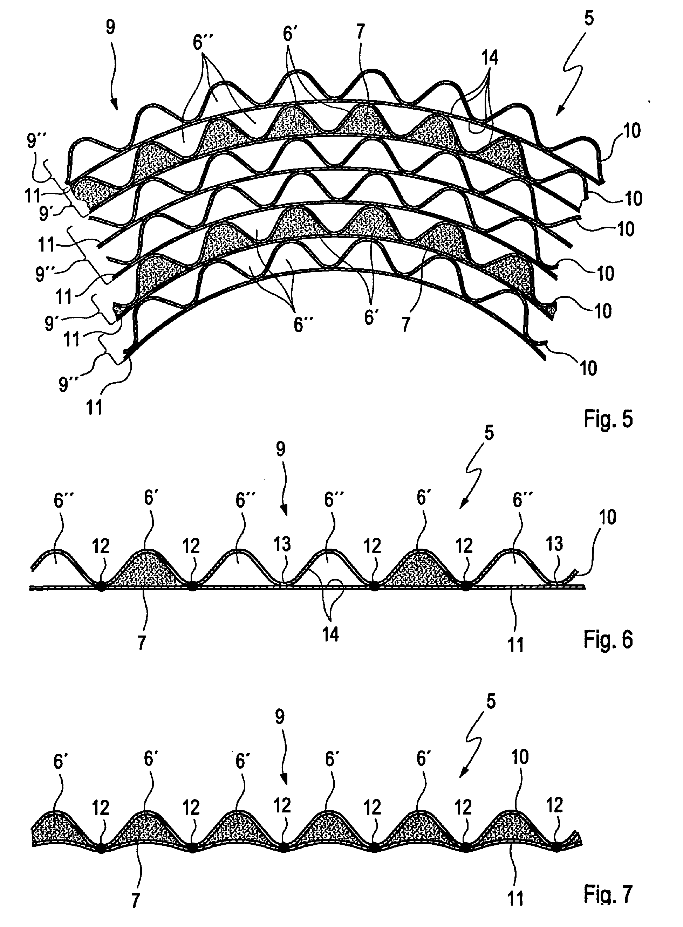

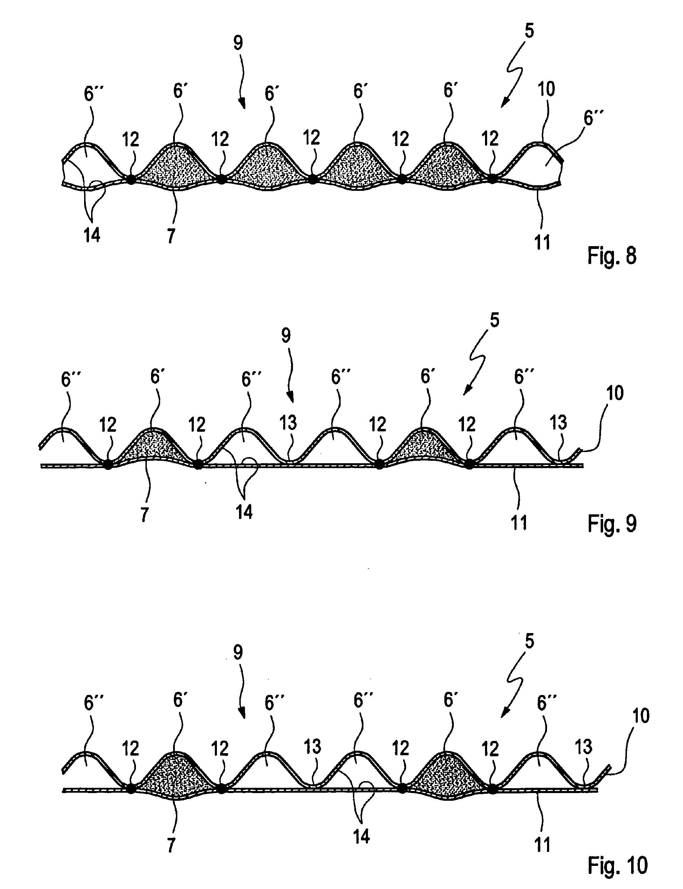

Entsprechend den Fig. 2 bis 12 wird beim hier vorgestellten Latentwärmespeicherkatalysator 3 der Körper 5 durch wenigstens eine Schichtstruktur 9 gebildet, welche die Kanäle 6 enthält und die in den Darstellungen der Fig. 2 bis 12 quer zur Längsrichtung der Kanäle 6 geschnitten ist und nur teilweise dargestellt ist. Die jeweilige Schichtstruktur 9 ist dabei mit wenigstens zwei Blechen 10, 11 gebildet, von denen zumindest das eine Blech 10 gewellt ist, während das andere Blech 11 in den Ausführungsformen der Fig. 2 bis 6 ungewellt oder glatt und insbesondere eben ausgestaltet ist. Bei den Ausführungsformen der Fig. 7, 8, 11 und 12 ist auch das andere Blech 11 gewellt ausgeführt. Bei den Ausführungsformen der Fig. 9 und 10 ist das andere Blech 11 teilweise gewellt und teilweise ungewellt bzw. flach und insbesondere eben ausgestaltet.

Zur Herstellung der jeweiligen Schichtstruktur 9 sind die beiden Bleche 10, 11 schichtförmig aufeinander gelegt und aneinander befestigt. Dabei bilden die Wellen des wenigstens einen Blechs 10 gemeinsam mit dem anderen Blech 11 die Kanäle 6. Je nach Betrachtungsweise liegt das gewellte Blech 10 im Bereich seiner dem jeweils anderen Blech 11 zugewandten Scheitellinien der Wellenberge bzw. Wellentäler am anderen Blech 11 an. Die Kontaktierung erfolgt dadurch linienförmig. Bei geradlinigen Wellenstrukturen sind auch diese Kontaktlinien geradlinig. Entlang solcher Kontaktlinien sind die beiden Bleche 10, 11 bevorzugt aneinander befestigt. Entsprechende Befestigungsstellen sind in den Fig. 2 und 6 bis 12 durch Verdickungen symbolisiert und mit 12 bezeichnet. Die Befestigungsstellen 12 können z. Bsp. durch Schweißnähte oder durch Lötverbindungen realisiert sein.

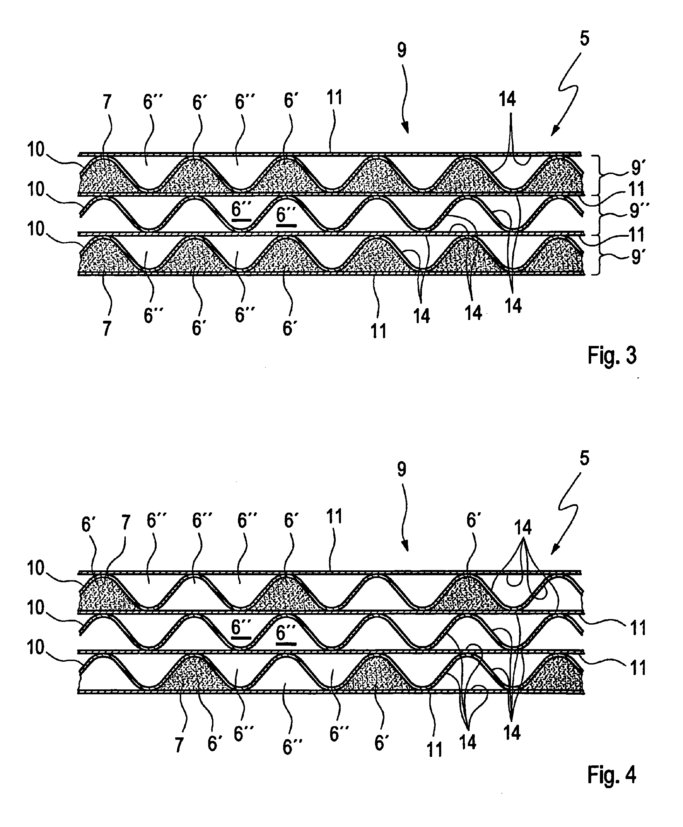

Zum Herstellen der Schichtstruktur 9 können die Bleche 10, 11 bspw. spiralförmig gewickelt werden, was in den gekrümmten Darstellungen der Fig. 2 und 5 angedeutet ist. Ebenso ist es möglich, die beiden Bleche 10, 11 paarweise in ebenen Lagen aufeinander zu schichten bzw. zu stapeln, was in den Fig. 3, 4 und 6 bis 12 angedeutet ist. Beide Herstellungsverfahren sind vergleichsweise einfach realisierbar und eignen sich insbesondere für eine Serienproduktion.

Von besonderem Vorteil ist eine z.B. in den Fig. 3 und 5 angedeutete Ausführungsform, bei welcher der Körper 5 aus zumindest zwei Schichtstrukturen 9 zusammengebaut ist, nämlich aus wenigstens einer ersten Schichtstruktur 9' und aus wenigstens einer zweiten Schichtstruktur 9". Dabei weist die erste Schichtstruktur 9' keine zweiten Kanäle 6" auf. Insbesondere kann die erste Schichtstruktur 9' auch so konzipiert sein, dass sie nur erste Kanäle 6' aufweist. Die zweite Schichtstruktur 9" weist keine ersten Kanäle 6' auf. Insbesondere kann die zweite Schichtstruktur 9"so gestaltet sein, dass sie nur zweite Kanäle 6" aufweist. Hierdurch lassen sich den Latentwärmespeicher repräsentierende erste Schichtstrukturen 9' und den Katalysator repräsentierende zweite Schichtstrukturen 9" separat voneinander herstellen und erst beim Zusammenbau bzw. beim Herstellen des Körpers 5 "verheiraten", um den Latentwärmespeicherkatalysator 3 zu bilden. Die separate Herstellbarkeit der unterschiedlichen Schichtstrukturen 9', 9" vereinfacht einerseits die Befüllung mit Phasenwechselmaterial 7 und andererseits das Anbringen der Beschichtung 14 aus Katalysatormaterial.

Bei den in den Fig. 2, 7, 8, 11 und 12 gezeigten Ausführungsformen sind die beiden Bleche 10, 11 entlang aller Kontaktlinien aneinander befestigt. Die Fig. 6, 9 und 10 zeigen dagegen Ausführungsformen bei denen die beiden Bleche 10, 11 nur entlang von solchen Kontaktlinien aneinander befestigt sind, die sich beiderseits von befüllten Kanälen 6' befinden. Im Bereich der übrigen Kontaktlinien liegen die beiden Bleche 10, 11 lose aneinander an. Derartige lose Anlagestellen sind in den Fig. 6, 9 und 10 mit 13 bezeichnet. Eine solche Konfiguration ermöglicht Relativbewegungen zwischen den beiden Blechen 10, 11. Relativbewegungen dieser Art können bspw. aufgrund thermischer Dehnungseffekte auftreten und reduzieren thermisch bedingte Spannungen innerhalb der Schichtstruktur 9.

Die mit dem Phasenwechselmaterial 7 befüllten ersten Kanäle 6' sind seitlich durch die Befestigungsstellen 12 verschlossen, die hierzu durchgehend ausgestaltet sind. An ihren Längsenden sind diese befüllten ersten Kanäle 6' ebenfalls auf geeignete Weise verschlossen. Durch das endseitige Verschließen der befüllten ersten Kanäle 6' wird das Phasenwechselmaterial 7 innerhalb dieser ersten Kanäle 6' nach außen gekapselt, so dass es auch im flüssigen Zustand innerhalb der dafür vorgesehenen abgeschlossenen ersten Kanäle 6' verbleibt. Die für die Gasführung vorgesehenen, katalytisch beschichteten zweiten Kanäle 6" sind endseitig offen. Durch die Anzahl befüllter erster Kanäle 6' und katalytisch aktiver zweiter Kanäle 6" sowie durch deren räumliche Anordnung innerhalb der Schichtstruktur 9 kann die Wärmespeicherkapazität des Latentwärmespeicherkatalysators 3 und die katalytische Aktivität des Latentwärmespeicherkatalysators 3 sowie die Wärmeübertragung innerhalb des Latentwärmespeicherkatalysators 3 beeinflusst werden. Die Fig. 3 bis 5 zeigen rein exemplarisch unterschiedliche Konfigurationen, die zu unterschiedlichen Speicherleistungen, Katalysatorleistungen und Wärmeübertragungsleistungen führen. Ferner kann die Anzahl der katalytisch aktiven zweiten Kanäle 6" durch den maximal in der Abgasanlage 1 auftretenden Abgasstrom 8 bzw. durch den zulässigen Durchströmungswiderstand vorgegeben sein, wodurch die Auslegung der Schichtstruktur 9 mitbestimmt ist.

Die durchströmbaren Kanäle 6 können zumindest teilweise katalytisch aktiv beschichtet sein, um die katalytisch aktiven zweiten Kanäle 6" zu bilden.

Hierdurch ist es besonders einfach möglich, in den Latentwärmespeicherkatalysator 3 die Katalysatorfunktion zu integrieren. Die Wärmespeicherung und die Wärmeabgabe innerhalb des Latentwärmespeicherkatalysators 3 können dadurch unmittelbar dort erfolgen, wo die Wärme gegebenenfalls benötigt wird bzw. zum Aufladen des Wärmespeichers 3 bereitgestellt wird. Hierdurch arbeitet der Latentwärmespeicherkatalysator 3 besonders effizient.

Hierzu kann das Phasenwechselmaterial 7 so ausgewählt werden, dass seine Phasenwechseltemperatur bei bzw. oberhalb einer Anspringtemperatur des jeweiligen Katalysatormaterials liegt. Hierdurch kann für den jeweiligen Katalysator eine Stand-by-Funktion realisiert werden, da mit Hilfe des Phasenwechselmaterials 7 der Katalysator relativ lange auf dem Temperaturniveau der Phasenwechseltemperatur gehalten werden kann. Katalytische Beschichtungen, die sich zur Realisierung einer derartigen Stand-by-Funktion eignen, sind bspw. Three-Way-Catalyst (TWC) oder Diesel-Oxidation-Catalyst (DOC). Alternativ (oder bei Verwendung von zwei verschiedenen Phasenwechselmaterialien zusätzlich) ist es möglich, das Phasenwechselmaterial so auszuwählen, dass sich seine Phasenwechseltemperatur am oberen Ende eines zulässigen Betriebstemperaturfensters des jeweiligen Katalysators befindet. Hierdurch kann eine Überhitzung des jeweiligen Katalysators vermieden werden. Nimmt die Temperatur des Katalysators stark zu und erreicht die obere Temperaturgrenze seines Betriebstemperaturfensters, wird die Phasenwechseltemperatur erreicht und das Phasenwechselmaterial 7 schmilzt und nimmt dabei Wärme auf. Während dieser latenten Wärmeaufnahme wird eine Temperaturerhöhung im Katalysator stark reduziert, wodurch dieser vor einer Überhitzung geschützt werden kann. Katalytische Beschichtungen, die sich für eine derartige Funktion eignen, sind insbesondere NOX-Speicher-Katalysator (NSK) und Partial-Oxidation-Catalyst (POC). Wie vorstehend angedeutet, kann der Latentwärmespeicherkatalysator 3 einer besonderen Ausführungsform beide vorbeschriebenen Funktionalitäten realisieren, wenn zwei verschiedene Phasenwechselmaterialien 7 in getrennten Kanälen 6 verwendet werden, die sich durch unterschiedliche Phasenwechseltemperaturen voneinander unterscheiden.

Die Ausführungsformen der Fig. 7 bis 12 zeigen Schichtstrukturen 9, bei denen beide Bleche 10, 11 Wellen aufweisen. Dabei besitzen die Wellenstrukturen beider Bleche 10, 11 bevorzugt gleiche Wellenlängen. Das heißt, der Abstand quer zur Wellenlängsrichtung zwischen zwei unmittelbar benachbarten Scheiteln ist bei beiden Blechen 10, 11 etwa gleich groß. Ferner können die Wellenstrukturen der beiden Bleche 10, 11 entsprechend den hier gezeigten Ausführungsformen unterschiedliche Amplituden aufweisen. Erkennbar zeigt das in den Fig. 7 bis 12 oben dargestellte erste Blech 10 größere Amplituden, also größere Abstände zwischen Wellental und Wellenberg, als das untere oder zweite Blech 11. Beispielsweise sind die Amplituden des einen Blechs 10 zweibis zehnmal größer als die Amplituden des anderen Blechs 11.

Sofern beide Bleche 10, 11 Wellen aufweisen, können thermisch bedingte Dehnungseffekte innerhalb der Schichtstruktur 9 besser aufgenommen bzw. kompensiert werden.

Die Fig. 7, 9 und 11 zeigen Ausführungsformen, bei denen die Bleche 10, 11 hinsichtlich ihrer Wellenstrukturen gleichphasig aneinander anliegen. Dass heißt, die Wellentäler des einen Blechs 10 kontaktieren das andere Blech 11 ebenfalls im Bereich von Wellentälern. Eine derartige Konfiguration kann auch als bi-konkave Wellenpaarung bezeichnet werden. Im Unterschied dazu zeigen die Fig. 8, 10 und 12 Konfigurationen, bei denen die Bleche 10, 11 hinsichtlich ihrer Wellenstrukturen phasenverschoben aneinander anliegen. Im Beispiel beträgt die Phasenverschiebung eine halbe Wellenlänge. Dies zeigt sich darin, dass die Wellentäler des einen Blechs 10 am anderen Blech 11 im Bereich von dessen Wellenbergen anliegen. Eine derartige Konfiguration kann auch als konkav-konvexe Wellenpaarung bezeichnet werden. Es ist klar, dass auch andere Phasenverschiebungen möglich sind, die größer oder kleiner als eine halbe Wellenlänge sind.

Die Fig. 9 und 10 zeigen spezielle Ausführungsformen, bei denen zwischen zwei benachbarten befüllten ersten Kanälen 6' zumindest ein katalytisch aktiver zweiter Kanal 6" angeordnet ist, wobei außerdem vorgesehen ist, das zweite Blech 11 nur im Bereich der befüllten ersten Kanäle 6' mit einer entsprechenden Welle auszustatten. Im Bereich der katalytisch aktiven zweiten Kanäle 6" ist das zweite Blech 11 bei diesen Ausführungsformen ungewellt bzw. glatt und insbesondere eben ausgestaltet. Die in Fig. 9 gezeigte Konfiguration kann als selektive bi-konkave Wellenpaarung bezeichnet werden, während die in Fig. 10 gezeigte Konfiguration als selektive konkav-konvexe Wellenpaarung bezeichnet werden kann.

Diese Konfigurationen zeichnen sich dadurch aus, dass für den Fall, dass mehrere katalytisch aktive zweite Kanäle 6" innerhalb der Speicherstruktur 5 zueinander benachbart sind, eine höhere Beweglichkeit zum Ausgleich von thermischen Dehnungseffekten gegeben ist.

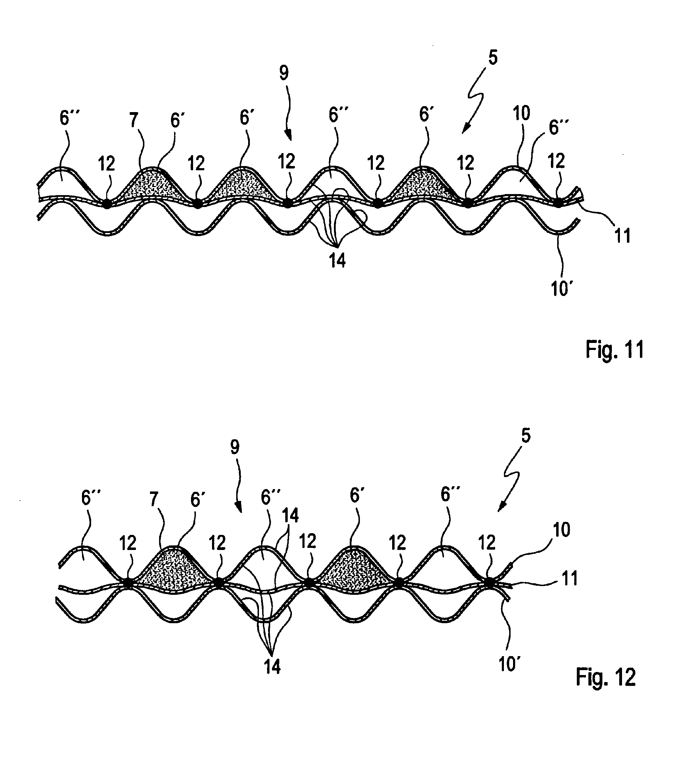

Fig. 11 zeigt für eine bi-konkave Wellenpaarung eine vorteilhafte Möglichkeit zur Anordnung benachbarter Wellenpaare bzw. Wellenblechpaare. Erkennbar wird ein benachbartes weiteres erstes Blech 10' gleichphasig zu den Blechen 10, 11 der vollständig dargestellten Wellenpaarung positioniert, so dass die dem zweiten Blech 11 der Wellenpaarung zugewandten Wellenberge des weiteren ersten Blechs 10' im Bereich der Wellenberge des zweiten Blechs 11 der Wellenpaarung anliegen. Durch die gleichphasige Anordnung innerhalb der Wellenpaarung liegen die Kontaktlinien des benachbarten Blechs 10' zwischen den Kontaktlinien innerhalb der Wellenpaarung.

Bei der in Fig. 12 gezeigten Konfiguration liegt das weitere Blech 10' mit seinen Wellenbergen ebenfalls im Bereich der Wellenberge des zugewandten zweiten Blechs 11 der Wellenpaarung an. Durch die Phasenverschiebung innerhalb der Wellenpaarung fallen dabei die Kontaktlinien zwischen dem weiteren Blech 10' und dem zweiten Blech 11 der Wellenpaarung mit den Kontaktlinien innerhalb der Wellenpaarung zusammen. Die hier vorgeschlagene Anordnung baut besonders kompakt.

## Patentansprüche

1. Latentwärmespeicherkatalysator für eine Abgasanlage (1) einer Brennkraftmaschine, insbesondere eines Kraftfahrzeugs,
- mit einem Körper (5), der mehrere parallel zueinander verlaufenden Kanäle (6) aufweist,
- wobei erste Kanäle (6') ein Phasenwechselmaterial (7) enthalten,
- wobei zweite Kanäle (6") eine katalytische Beschichtung (14) aufweisen,
- wobei der Körper (5) durch mindestens eine Schichtstruktur (9) mit mindestens zwei Blechen (10, 11) gebildet ist, von denen zumindest eines gewellt ist und die aneinander anliegen, derart, dass die Wellen des wenigstens einen Blechs (10) die Kanäle (6) bilden,
- wobei die beiden Bleche (10, 11) entlang von Kontaktlinien aneinander anliegen,
**dadurch gekennzeichnet,**
- **dass** die beiden Bleche (10, 11) nur entlang von Kontaktlinien aneinander befestigt sind, die beiderseits von ersten Kanälen (6') angeordnet sind,
- **dass** die beiden Bleche (10, 11) entlang einiger Kontaktlinien lose aneinander anliegen.

2. Latentwärmespeicherkatalysator nach Anspruch 1,
**dadurch gekennzeichnet,**
- **dass** die zwei Bleche (10, 11) spiralförmig gewickelt sind, oder
- **dass** die zwei Bleche (10, 11) paarweise in ebenen Lagen aufeinander geschichtet sind.

3. Latentwärmespeicherkatalysator nach einem der Ansprüche 1 und 2,
**dadurch gekennzeichnet,**
**dass** die mit Phasenwechselmaterial (7) befüllten ersten Kanäle (6') endseitig verschlossen und von Abgas nicht durchströmbar sind, während die katalytisch beschichteten zweiten Kanäle (6") von Abgas durchströmbar sind.

4. Latentwärmespeicherkatalysator nach einem der Ansprüche 1 bis 3,
**dadurch gekennzeichnet,**
**dass** das andere Blech (11) glatt oder ungewellt ist.

5. Latentwärmespeicherkatalysator nach einem der Ansprüche 1 bis 3,
**dadurch gekennzeichnet,**
**dass** das andere Blech (11) auch gewellt ist oder Wellen aufweist.

6. Latentwärmespeicherkatalysator nach Anspruch 5,
**dadurch gekennzeichnet,**
**dass** die Wellenstrukturen der beiden Bleche (10, 11) gleiche Wellenlängen aufweisen.

7. Latentwärmespeicherkatalysator nach Anspruch 5 oder 6,
**dadurch gekennzeichnet,**
**dass** die Wellenstrukturen der beiden Bleche (10, 11) unterschiedliche Amplituden aufweisen.

8. Latentwärmespeicherkatalysator nach einem der Ansprüche 5 bis 7,
**dadurch gekennzeichnet,**
**dass** die Bleche (10, 11) hinsichtlich ihrer Wellenstrukturen gleichphasig aneinander anliegen.

9. Latentwärmespeicherkatalysator nach einem der Ansprüche 5 bis 7,
**dadurch gekennzeichnet,**
**dass** die Bleche (10, 11) hinsichtlich ihrer Wellenstrukturen phasenverschoben, insbesondere um eine halbe Wellenlänge, aneinander anliegen.

10. Latentwärmespeicherkatalysator nach einem der Ansprüche 1 bis 9,
**dadurch gekennzeichnet,**
**dass** der Körper (5) aus zumindest zwei Schichtstrukturen (9) zusammengebaut ist, wobei eine erste Schichtstruktur (9') keine zweiten Kanäle (6") aufweist, während eine zweite Schichtstruktur (9") keine ersten Kanäle (6') aufweist.

11. Verfahren zum Herstellen eines Latentwärmespeicherkatalysators (3) nach Anspruch 10,
bei dem zumindest eine solche erste Schichtstruktur (9') mit mindestens einer solchen zweiten Schichtstruktur (9") zusammengebaut werden.

## Claims

1. A latent heat storage catalytic converter for an exhaust system (1) of an internal combustion engine, in particular of a motor vehicle,
- with a body (5), comprising a plurality of channels (6) running parallel to one another,
- wherein first channels (6') contain a phase change material (7),
- wherein second channels (6") have a catalytic coating (14),
- wherein the body (5) is formed through at least one layer structure (9) with at least two plates (10, 11) of which at least one is wavy and which bear against one another in such a manner that the waves of the at least one plate (10) form the channels (6),
- wherein the two plates (10, 11) bear against one another along contact lines,
**characterized in that**
- the two plates (10, 11) are fastened to one another only along contact lines which are arranged on both sides of first channels (6'),
- the two plates (10, 11) loosely bear against one another along some contact lines.

2. The latent heat storage catalytic converter according to Claim 1,
**characterized in that**
- the two plates (10, 11) are spirally wound, or
- the two plates (10, 11) are stacked onto one another in pairs in flat layers.

3. The latent heat storage catalytic converter according to any one of the Claims 1 and 2,
**characterized in that**
the first channels (6') which are filled with phase change material (7) are closed on the end sides and cannot be subjected to an exhaust gas through-flow, while the catalytically coated second channels (6") can be subjected to an exhaust gas through-flow.

4. The latent heat storage catalytic converter according to any one of the Claims 1 to 3,
**characterized in that**
the other plate (11) is smooth or non-wavy.

5. The latent heat storage catalytic converter according to any one of the Claims 1 to 3,
**characterized in that**
the other plate (11) is also wavy or has waves.

6. The latent heat storage catalytic converter according to Claim 5,
**characterized in that**
the wave structures of the two plates (10, 11) have same wave lengths.

7. The latent heat storage catalytic converter according to Claim 5 or 6,
**characterized in that**
the wave structures of the two plates (10, 11) have different amplitudes.

8. The latent heat storage catalytic converter according to any one of the Claims 5 to 7,
**characterized in that**
the plates (10, 11) bear against one another inphase with respect to their wave structures.

9. The latent heat storage catalytic converter according to any one of the Claims 5 to 7,
**characterized in that**
the plates (10, 11) bear against one another phaseshifted with respect to their wave structures, in particular by half a wave length.

10. The latent heat storage catalytic converter according to any one of the Claims 1 and 9,
**characterized in that**
the body (5) is assembled from at least two layer structures (9), wherein a first layer structure (9') has no second channels (6"), while a second layer structure (9") has no first channels (6').

11. A method for producing a latent heat storage catalytic converter (3) according to Claim 10,
in which at least one such first layer structure (9') with at least one such second layer structure (9") are assembled.

## Revendications

1. Catalyseur à accumulateur de chaleur latente pour une installation de gaz d'échappement (1) d'un moteur à combustion interne, notamment d'un véhicule automobile,
- comportant un corps (5), qui présente plusieurs canaux (6) s'étendant parallèlement les uns aux autres,
- dans lequel les premiers canaux (6') contiennent un matériau de changement de phase (7),
- dans lequel les deuxièmes canaux (6") présentent un revêtement catalytique (14),
- dans lequel le corps (5) est formé par au moins une structure de couches (9) avec au moins deux tôles (10, 11), desquelles au moins une est ondulée et qui viennent reposer l'une sur l'autre, de telle sorte que les ondulations d'au moins une tôle (10) forment les canaux (6),
- dans lequel les deux tôles (10, 11) viennent reposer l'une sur l'autre le long de lignes de contact,
**caractérisé en ce que**
- les deux tôles (10, 11) sont fixées l'une à l'autre seulement le long de lignes de contact, qui sont disposées des deux côtés des premiers canaux (6'),
- les deux tôles (10, 11) viennent reposer l'une sur l'autre de manière souple le long de quelques lignes de contact.

2. Catalyseur à accumulateur de chaleur latente selon la revendication 1,
**caractérisé en ce que**
- les deux tôles (10, 11) sont enroulées en forme de spirale, ou
- les deux tôles (10, 11) sont superposées l'une à l'autre par paire dans des positions planes.

3. Catalyseur à accumulateur de chaleur latente selon une des revendications 1 à 2,
**caractérisé en ce que**
les premiers canaux (6') remplis par le matériau de changement de phase (7) sont obturés aux extrémités et ne sont pas traversés par un gaz d'échappement, alors que les deuxième canaux (6") revêtus catalytiquement peuvent être traversés par du gaz d'échappement.

4. Catalyseur à accumulateur de chaleur latente selon une des revendications 1 à 3,
**caractérisé en ce que**
l'autre tôle (11) est plate ou non ondulée.

5. Catalyseur à accumulateur de chaleur latente selon une des revendications 1 à 3,
**caractérisé en ce que**
l'autre tôle (11) est aussi ondulée ou présente des ondulations.

6. Catalyseur à accumulateur de chaleur latente selon la revendication 5,
**caractérisé en ce que**
les structures d'ondulations des deux tôles (10, 11) présentent les mêmes longueurs d'ondulations.

7. Catalyseur à accumulateur de chaleur latente selon les revendications 5 ou 6,
**caractérisé en ce que**
les structures d'ondulation des deux tôles (10, 11) présentent des amplitudes différentes.

8. Catalyseur à accumulateur de chaleur latente selon une des revendications 5 à 7,
**caractérisé en ce que**
les tôles (10, 11) viennent reposer l'une sur l'autre à la même phase en ce qui concerne leurs structures d'ondulations.

9. Catalyseur à accumulateur de chaleur latente selon une des revendications 5 à 7,
**caractérisé en ce que**
les tôles (10, 11) viennent reposer l'une sur l'autre avec un décalage de phase en ce qui concerne leurs structures d'ondulations, notamment d'une demie ondulation.

10. Catalyseur à accumulateur de chaleur latente selon une des revendications 1 à 9,
**caractérisé en ce que**
le corps (5) est composé d'au moins deux structures à couches (9), dans lequel une première structure à couches (9') ne présente pas de deuxièmes canaux (6"), alors qu'une deuxième structure à couches (9") ne présente pas de premiers canaux (6').

11. Procédé de fabrication d'un catalyseur à accumulateur de chaleur latente (3) selon la revendication 10,
dans lequel au moins une telle première structure à couches (9') est assemblée avec au moins une deuxième telle structure à couches (9").
